# EUROPÄISCHE PATENTSCHRIFT

(11) **EP 3 680 981 B1**
(45) Veröffentlichungstag und Bekanntmachung des Hinweises auf die Patenterteilung: **01.03.2023**
(21) Anmeldenummer: 19151528.7
(22) Anmeldetag: 11.01.2019
(51) Int. Cl.: H01M 10/42, H01M 6/40

(54) **ELEKTROCHEMISCHE ZELLE UND ANORDNUNG ELEKTRISCH MITEINANDER VERSCHALTETER BAUTEILE**
ELECTROCHEMICAL CELL AND ASSEMBLY OF ELECTRICALLY INTERCONNECTED COMPONENTS
CELLULE ÉLECTROCHIMIQUE ET AGENCEMENT DE COMPOSANTS CONNECTÉS ÉLECTRIQUEMENT LES UNS AUX AUTRES

(43) Veröffentlichungstag der Anmeldung: 15.07.2020
(73) Patentinhaber: VARTA Microbattery GmbH, 73479 Ellwangen Jagst (DE)
(72) Erfinder: Fink, Werner, 72414 Rangendingen (DE); Krebs, Martin, 73494 Rosenberg (DE)
(74) Vertreter: Ostertag & Partner Patentanwälte mbB

(56) Entgegenhaltungen:
- WO-A1-03/009920
- WO-A1-2010/026285
- US-B1- 6 379 835

## Beschreibung

Die nachfolgend beschriebene Erfindung betrifft eine elektrochemische Zelle sowie eine Anordnung elektrisch miteinander verschalteter Bauteile.

Elektrochemische Zellen umfassen stets eine positive und eine negative Elektrode. Bei der Entladung einer elektrochemischen Zelle findet eine energieliefernde chemische Reaktion statt, welche sich aus zwei elektrisch miteinander gekoppelten, aber räumlich voneinander getrennten Teilreaktionen zusammensetzt. Eine bei vergleichsweise niedrigerem Redoxpotential stattfindende Teilreaktion läuft an der negativen Elektrode ab, eine bei vergleichsweise höherem Redoxpotential an der positiven Elektrode. Bei der Entladung werden an der negativen Elektrode durch einen Oxidationsprozess Elektronen freigesetzt, resultierend in einem Elektronenstrom - meist über einen äußeren Verbraucher - zur positiven Elektrode, von der eine entsprechende Menge an Elektronen aufgenommen wird. An der positiven Elektrode findet also ein Reduktionsprozess statt. Zeitgleich kommt es zu einem der Elektrodenreaktion entsprechenden lonenstrom innerhalb der Zelle. Dieser lonenstrom wird durch einen ionisch leitenden Elektrolyten gewährleistet. In sekundären elektrochemischen Zellen ist diese Entladereaktion reversibel, es besteht also die Möglichkeit, die bei der Entladung erfolgte Umwandlung chemischer Energie in elektrische umzukehren. Bei primären Zellen ist die Entladereaktion hingegen irreversibel oder aber eine Wiederaufladung der Zelle verbietet sich aus anderen Gründen.

Ursprünglich wurden mehrere in Serie geschaltete elektrochemische Zellen in einem Gehäuse als Batterie bezeichnet. Heute werden jedoch häufig auch einzelne elektrochemische Zellen als Batterie bezeichnet.

Elektrochemische Zellen sind nicht nur durch Zusammenfügen fester Einzelkomponenten herstellbar, vielmehr gewinnen in den letzten Jahren auch verstärkt Zellen an Bedeutung, zu deren Herstellung zumindest einzelne Funktionsteile, insbesondere die Elektroden und/oder erforderlichen Leiterbahnen, durch Druck, also aus einer Lösungs- und/oder Suspensionsmittel-haltigen Paste, hergestellt werden. So hergestellte Zellen sind beispielsweise aus der WO 03/009920 A1 oder der WO 2010/026285 A1 bekannt.

In der Regel weisen gedruckte elektrochemische Zellen einen mehrschichtigen Aufbau auf. In herkömmlicher Bauweise umfasst eine gedruckte elektrochemische Zelle meist zwei Stromkollektorebenen, zwei Elektrodenebenen und eine Elektrolytebene in stapelartiger Anordnung. Die Elektrolytebene ist dabei zwischen den zwei Elektrodenebenen angeordnet, während die Stromkollektoren die Ober- bzw. die Unterseite der elektrochemischen Zelle bilden. Eine elektrochemische Zelle mit einem solchen Aufbau ist beispielsweise in der US 4119770 A beschrieben.

Deutlich flachere elektrochemische Zellen, bei denen sich die Elektroden nebeneinander auf einem flächigen, elektrisch nicht leitenden Substrat befinden (koplanare Anordnung), sind in der WO 2006/105966 A1 beschrieben. Die Elektroden sind hierbei über einen ionenleitfähigen Elektrolyten miteinander verbunden, bei dem es sich beispielsweise um eine gelartige Zinkchloridpaste handeln kann. In aller Regel ist der Elektrolyt dabei durch ein vlies- oder netzartiges Material verstärkt und stabilisiert. Zellen mit koplanar angeordneten Elektroden sind weiterhin aus der US 6379835 A bekannt.

Natürlich lassen sich nicht nur elektrochemische Zellen drucken. Vielmehr ist es möglich, auch Schaltungen mit elektrochemischen Zellen zu drucken, insbesondere die elektrischen Leiter, die benötigt werden, um elektrische Bauteile mit den Polen der elektrochemischen Zelle zu kontaktieren. Die elektrischen Bauteile können, sofern sie nicht ebenfalls über Druck hergestellt werden, in einem weiteren Schritt auf die gedruckten Leiter aufgeklebt werden, beispielsweise mittels eines Leitklebers.

Elektrochemische Zellen bekannten Aufbaus, beispielsweise die in den Figuren der WO 2006/105966 A1 dargestellten Zellen, werden häufig benötigt, um elektrische Bauteile mit unterschiedlichem Strombedarf zu betreiben, beispielsweise einen optischen Signalgeber wie eine LED und einen IC (integrierten Schaltkreis). Dabei stoßen die Zellen schnell an ihre Leistungsgrenzen. Um dem zu begegnen, werden die Bauteile bislang jeweils von separaten elektrochemischen Zellen mit Energie gespeist. Hierdurch verteuert sich jedoch die Produktion der betroffenen Schaltungen. Darüber hinaus wächst der Flächenbedarf für die Schaltung.

Der hier beschriebenen Erfindung lag die Aufgabe zu Grunde, eine Lösung für diese Probleme bereitzustellen.

Zur Lösung dieser Aufgabe schlägt die Erfindung eine elektrochemische Zelle mit den in Anspruch 1 genannten Merkmalen und eine Anordnung mit den in Anspruch 6 genannten Merkmalen vor. Weiterbildungen der Erfindung sind Gegenstand von Unteransprüchen.

Die beanspruchte elektrochemische Zelle zeichnet sich durch die folgenden Merkmale aus:
- Sie umfasst eine erste Elektrode einer ersten Polarität,
- sie umfasst eine zweite Elektrode einer zweiten, der ersten Polarität entgegengesetzten Polarität, und
- sie umfasst eine dritte Elektrode, welche die gleiche Polarität wie die zweite Elektrode aufweist. Hierbei sind
- die erste, die zweite und die dritte Elektrode getrennt voneinander in einer koplanaren Anordnung nebeneinander auf einer Oberfläche eines Substrats angeordnet und
- die erste Elektrode ist mit der zweiten und der dritten Elektrode über einen ionenleitfähigen Elektrolyten, insbesondere eine Schicht aus dem ionenleitfähigen Elektrolyten, verbunden.

Die beanspruchte Zelle weist also einen beispielsweise als erste Elektrode einen Minuspol und als zweite und dritte Elektrode zwei Pluspole auf. Alternativ könnte man eine solche Konfiguration allerdings auch als Kombination zweier Zellen ansehen, die einen gemeinsamen Minuspol aufweisen.

Bei der Oberfläche, auf der die Elektroden angeordnet sind, handelt es sich bevorzugt um eine elektrisch nichtleitende Oberfläche. Beispielsweise kann es sich bei dem Substrat um ein Substrat aus Papier oder aus elektrisch nichtleitendem Kunststoff handeln.

In einer bevorzugten Weiterbildung der Erfindung zeichnet sich die beanspruchte Zelle durch mindestens eines der unmittelbar folgenden Merkmale a. bis c. aus:
a. Sie umfasst eine vierte und/oder eine fünfte Elektrode, welche die gleiche Polarität wie die zweite Elektrode aufweist.
b. Die erste, die zweite, die dritte sowie die vierte und/oder die fünfte Elektrode sind in einer koplanaren Anordnung nebeneinander auf dem Substrat angeordnet.
c. Die erste Elektrode ist mit der vierten und/oder der fünften Elektrode über einen ionenleitfähigen Elektrolyten verbunden.

Die beanspruchte Zelle kann also beispielsweise als erste Elektrode einen Minuspol und als zweite und dritte und vierte Elektrode drei Pluspole aufweisen. Alternativ könnte man eine solche Konfiguration auch als Kombination dreier Zellen ansehen, die einen gemeinsamen Minuspol aufweisen.

In einerweiteren bevorzugten Weiterbildung der Erfindung zeichnet sich die beanspruchte Zelle durch mindestens eines der unmittelbar folgenden Merkmale a. bis g. aus:
a. Die erste, die zweite und die dritte Elektrode sind bevorzugt jeweils durch einen Spalt voneinander getrennt.
b. Der ionenleitfähige Elektrolyt füllt den Spalt zwischen der ersten und der zweiten sowie der ersten und der dritten Elektrode.
c. Der ionenleitfähige Elektrolyt füllt den Spalt zwischen der zweiten und der dritten Elektrode.
d. Die erste Elektrode und die die vierte und/oder die fünfte Elektrode sind bevorzugt jeweils durch einen Spalt voneinander sowie von der zweiten und der dritten Elektrode getrennt.
e. Der ionenleitfähige Elektrolyt füllt den Spalt zwischen der ersten Elektrode und der vierten Elektrode und/oder den Spalt zwischen der ersten Elektrode und der fünften Elektrode.
f. Der ionenleitfähige Elektrolyt füllt den Spalt zwischen der vierten und der fünften Elektrode.
g. Der ionenleitfähige Elektrolyt füllt den Spalt zwischen der vierten und/oder der fünften Elektrode auf der einen Seite und derzweiten und der dritten Elektrode auf der anderen Seite.

Besonders bevorzugt sind zumindest die unmittelbar vorstehenden Merkmale a., b. und c. in Kombination miteinander realisiert. Bei Anwesenheit der vierten und gegebenenfalls der fünften Elektrode sind bevorzugt die unmittelbar vorstehenden Merkmale d. bis g. in Kombination miteinander realisiert.

Der Spalt zwischen den Elektroden weist bevorzugt eine Breite im Bereich von 10 µm bis 1 mm auf.

In einer besonders bevorzugten Weiterbildung der Erfindung zeichnet sich die beanspruchte Zelle durch mindestens eines der unmittelbar folgenden Merkmale a. bis d. aus:
a. Die erste Elektrode ist eine negative Elektrode und umfasst ein negatives Elektrodenaktivmaterial während die zweite, die dritte, die vierte und/oder die fünfte Elektrode positive Elektroden sind und jeweils ein positives Elektrodenaktivmaterial umfassen.
b. Das positive Elektrodenaktivmaterial der zweiten Elektrode unterscheidet sich vom positiven Elektrodenaktivmaterial der dritten und/oder der vierten und/oder der fünften Elektrode.
c. Die erste Elektrode ist eine positive Elektrode und umfasst ein positives Elektrodenaktivmaterial während die zweite, die dritte, die vierte und/oder die fünfte Elektrode negative Elektroden sind und jeweils ein negatives Elektrodenaktivmaterial umfassen.
d. Das negative Elektrodenaktivmaterial der zweiten Elektrode unterscheidet sich vom negativen Elektrodenaktivmaterial der dritten und/oder der vierten und/oder der fünften Elektrode.

In bevorzugten Ausführungsformen sind die unmittelbar vorstehenden Merkmale a. und b. oder c. und d. in Kombination miteinander realisiert.

Unter einem Elektrodenaktivmaterial wird gemeinhin ein Material verstanden, das aktiv an den Entladungs- und gegebenenfalls auch Ladungsprozessen in einer elektrochemischen Zelle teilnimmt, elektrische Energie also abgeben und gegebenenfalls wieder aufnehmen kann. Wie eingangs erläutert, ist Energie in einer Batterie in der Regel in chemischer Form gespeichert und wird während eines Entladungsprozesses in elektrische Energie umgewandelt. Darüber hinaus ist es aber natürlich auch möglich, elektrische Energie statisch in Form getrennter elektrischer Ladungen zu speichern. Dies erfolgt so klassisch in Kondensatoren.

Bei der erfindungsgemäßen elektrochemischen Zelle handelt es sich in besonders bevorzugten Ausführungsformen um eine primäre Zelle, also um eine nicht wiederaufladbare Zelle. Insbesondere in diesem Fall umfasst das negative Elektrodenaktivmaterial bevorzugt ein oxidierbares Metall, bevorzugt mindestens ein Metall aus der Gruppe mit Zink, Aluminium und Magnesium oder eine Legierung mit mindestens einem dieser Metalle.

Zusätzlich zu dem oxidierbaren Metall oder alternativ hierzu kann das negative Elektrodenaktivmaterial ein Kohlenstoff-basiertes Material, insbesondere aus der Gruppe mit Aktivkohle, Aktivkohlefaser, Carbid-abgeleiteter Kohlenstoff, Kohlenstoff-Aerogel, Graphit, Graphen und Kohlenstoffnanoröhrchen (CNTs) umfassen.

Bei Aktivkohle handelt es sich bekanntlich um eine poröse, besonders feinkörnige Kohlenstoffmodifikation mit großer innerer Oberfläche. Erfindungsgemäß einsetzbare Aktivkohle weist bevorzugt eine BET-Oberfläche von mindestens 800 m²/g, bevorzugt von mindestens 900 m²/g (jeweils bestimmt gemäß DIN ISO 9277) auf. Alternativ oder zusätzlich weist erfindungsgemäß einsetzbare Aktivkohle einen Kapazitätswert von mindestens 60 F/g (bestimmt gemäß DIN IEC 62391) auf.

Aktivkohlefasern können aus Aktivkohle gewonnen werden. Sie sind ebenfalls porös, weisen eine gro-βe innere Oberfläche auf und haben meist einen typischen Durchmesser von etwa 10 µm. Neben einer hohen spezifischen Kapazität weisen Aktivkohlefasern eine außerordentlich gute Leitfähigkeit entlang der Faserachse auf.

Kohlenstoff-Aerogel ist ein synthetisches, hochporöses Material aus einem organischen Gel, in dem die flüssige Komponente des Gels durch Pyrolyse mit einem Gas ersetzt wurde. Kohlenstoff-Aerogele können beispielsweise durch Pyrolyse von Resorcin-Formaldehyd hergestellt werden. Sie weisen eine bessere elektrische Leitfähigkeit auf als Aktivkohle.

Carbid-abgeleitete Kohlenstoffe (CDC) bestehen aus einer Anzahl von Stoffen, die aus Carbiden wie zum Beispiel Siliciumcarbid und Titancarbid durch thermische Zersetzung oder durch chemische Halogenierung in einen reinen Kohlenstoff umgewandelt wurden. Elektroden aus Carbid-abgeleiteten Kohlenstoffen besitzen große Oberflächen mit maßgeschneiderten Porengrößen. Im Allgemeinen haben Elektroden aus CDC eine höhere Energiedichte als Elektroden aus Aktivkohle.

Bei Graphen handelt es sich um eine Kohlenstoffmodifikation mit zweidimensionaler Struktur. Eine Vielzahl von verketteten Benzol-Ringen bildet ein bienenwabenförmiges Muster aus, in dem jedes Kohlenstoffatom im Winkel von 120° von drei weiteren Kohlenstoffatomen umgeben ist und wobei alle Kohlenstoffatome sp²-hybridisiert sind. Graphen bietet die theoretisch größte mit Kohlenstoff erreichbare Oberfläche pro Gewichtseinheit und ist daher aktuell Gegenstand intensiver Untersuchungen im Zusammenhang mit der Entwicklung von Superkondensatoren.

Bei Kohlenstoffnanoröhrchen (CNTs) handelt es sich um zu zylindrischen Nanoröhren umgeformte Graphenschichten. Es gibt einwandige Nanoröhren und mehrwandige Nanoröhren, bei denen mehrere einwandige Nanoröhren koaxial ineinander verschachtelt angeordnet sind. Allgemein besitzen CNT-Elektroden eine kleinere Elektrodenoberfläche als Aktivkohle. Ungeachtet dessen lassen sich mit CNTs höhere Kapazitäten erzielen als mit Aktivkohle-Elektroden.

Selbstverständlich kann das negative Elektrodenaktivmaterial die genannten Kohlenstoff-basierten Materialien auch in Kombination miteinander umfassen. Hierbei ist jedes Mischungsverhältnis denkbar.

Als positives Elektrodenaktivmaterial kommt im Falle einer primären Zelle bevorzugt ein oxidisches Material aus der Gruppe mit Mangandioxid, Silberoxid und Nickelhydroxid zum Einsatz. Gegebenenfalls kann das positive Elektrodenaktivmaterial auch einen Katalysator umfassen, der die Reduktion von Luftsauerstoff bei Raumtemperatur katalysiert. Bei einem solchen Katalysator handelt es sich beispielsweise um Platin, Palladium oder Manganoxid.

Zusätzlich zu den genannten oxidischen Materialien und diesen Katalysatoren oder auch alternativ hierzu kann das positive Elektrodenaktivmaterial eines oder mehrere der oben genannten Kohlenstoff-basierten Materialien umfassen, also insbesondere Aktivkohle, Aktivkohlefaser, Carbid-abgeleiteter Kohlenstoff, Kohlenstoff-Aerogel, Graphit, Graphen und/oder Kohlenstoffnanoröhrchen (CNTs).

Neben den genannten Elektrodenaktivmaterialien können die Elektroden der beanspruchten elektrochemischen Zelle als weitere feste Bestandteile auch einen Elektrodenbinder und/oder ein Leitmittel enthalten.

Bei dem Leitmittel handelt es sich beispielsweise um ein Metallpulver, insbesondere um Nickel und/oder Kobaltpulver.

Als Elektrodenbinder kann beispielsweise ein Cellulose-basierter Binder, beispielsweise Carboxymethylcellulose oder ein Derivat von Carboxymethylcellulose, verwendet werden. Besonders geeignet sind auch wasserlösliche Celluloseether wie beispielsweise Methylhydroxyethylcellulose (MHEC), Methylhydroxypro pylcellulose (MHPC) und Hydroxyethylcellulose (HEG). Alternativ kommen aber auch Polyacrylate oder Kunststoff-basierte Binder wie zum Beispiel PTFE-Binder (PTFE = Polytetrafluorethylen) oder Binder auf Basis von SBR (Styrene-Butadien-Rubber) in Frage.

Aus diesen Ausführungen wird klar, dass es sich bei der erfindungsgemäßen elektrochemischen Zelle bevorzugt um eine Zink-Braunstein-Zelle (im Fall von Zink als Bestandteil des negativen Elektrodenaktivmaterials und Mangandioxid als Bestandteil des positiven Elektrodenaktivmaterials), um eine Silberoxid-Zink-Zelle (im Fall von Zink als Bestandteil des negativen Elektrodenaktivmaterials und Silberoxid als Bestandteil des positiven Elektrodenaktivmaterials), um eine Nickel-Oxyhydroxid-Zelle (im Fall von Zink als Bestandteil des negativen Elektrodenaktivmaterials und Nickelhydroxid als Bestandteil des positiven Elektrodenaktivmaterials im Fall von Nickelhydroxid) oder um eine Zink-Luft-Zelle (im Fall von Zink als Bestandteil des negativen Elektrodenaktivmaterials und des die Reduktion von Luftsauerstoff katalysierenden Katalysators als Bestandteil des positiven Elektrodenaktivmaterials) handelt.

In einigen Ausführungsformen kann die Zelle aber auch eine sekundäre Zelle, also eine wiederaufladbare Zelle, sein. In diesem Fall kann als positives Elektrodenaktivmaterial beispielsweise Lithium-Cobalt(III)-oxid, Lithiumtitanat, Mangandioxid, Eisendisulfid, LiMn₂O₄-Spinell oder Lithiumeisenphosphat zum Einsatz kommen und als negatives Elektrodenaktivmaterial beispielsweise graphitischer Kohlenstoff und/oder ein zur Interkalation von Lithium befähigtes nicht-graphitisches Kohlenstoffmaterial und/oder ein metallisches oder halbmetallisches Material, das mit Lithium legierbar ist (beispielsweise Zinn, Antimon oder Silizium).

Wenn die Elektroden beider Polaritäten als Elektrodenaktivmaterial ausschließlich eines oder mehrere der genannten Kohlenstoff-basierten Materialien umfassen, so ist die beanspruchte Zelle bevorzugt ein Doppelschichtkondensator. Die genannten Kohlenstoff-basierten Materialien sind nämlich in besonderem MaßzurAusbildungvon Doppelschichtkapazitäten befähigt.

Doppelschichtkondensatoren (englisch: electric double layer capacitor) sind bereits seit langem bekannt. Bei diesen bildet sich an der Phasengrenze zwischen Elektrodenoberfläche und Elektrolyt beim Anlegen einer elektrischen Spannung eine Doppelschichtkapazität aus. In dieser ist elektrische Energie in einem elektrischen Feld gespeichert. Die Menge der gespeicherten Ladung ist dabei proportional zur angelegten Spannung und wird ganz wesentlich durch die Größe und Beschaffenheit der Elektrodenoberfläche bestimmt.

In den genannten bevorzugten Ausführungsformen, bei denen sich das Elektrodenaktivmaterial der zweiten Elektrode vom Elektrodenaktivmaterial der dritten und gegebenenfalls auch der vierten und/oder der fünften Elektrode unterscheidet, besteht der Unterschied bevorzugt darin, dass die zweite Elektrode eine Menge an mindestens einem der oben genannten Kohlenstoff-basierten Materialien aufweist, die höher oder niedriger ist als der Menge dieser Materialien in der oder den weiteren Elektroden. Durch die größere Menge an dem mindestens einen Kohlenstoff-basierten Material beispielsweise in einer zweiten positiven Elektrode ist gewährleistet, dass diese Elektrode eine höhere Doppelschichtkapazität als die dritte und gegebenenfalls die vierte und/oder die fünfte positive Elektrode aufweist.

Die folgenden bevorzugten Konstellationen sind möglich:
(a) Die erste Elektrode ist eine negative Elektrode und umfasst ein negatives Elektrodenaktivmaterial während die zweite, die dritte und gegebenenfalls die vierte und/oder die fünfte Elektrode positive Elektroden sind und jeweils ein positives Elektrodenaktivmaterial umfassen, wobei die zweite Elektrode als Elektrodenaktivmaterial ausschließlich mindestens eines der oben genannten Kohlenstoff-basierten Materialien aufweist und die dritte und gegebenenfalls die vierte und/oder die fünfte Elektrode ausschließlich das oben genannte oxidische Material und/oder einen der genannten Katalysatoren aufweist: Die zweite Elektrode kann in diesem Fall elektrische Energie nur statisch speichern. Sie ist dann aber besser zur Abgabe von kurzen Pulsströmen hoher Intensität geeignet als die dritte und/oder die vierte und/oder die fünfte Elektrode. Dies gilt natürlich insbesondere dann, wenn gleichzeitig die negative Elektrode zumindest einen Anteil an mindestens einem der oben genannten Kohlenstoff-basierten Materialien aufweist.
(b) Die erste Elektrode ist eine negative Elektrode und umfasst ein negatives Elektrodenaktivmaterial während die zweite, die dritte und gegebenenfalls die vierte und/oder die fünfte Elektrode positive Elektroden sind und jeweils ein positives Elektrodenaktivmaterial umfassen, wobei die zweite Elektrode als Elektrodenaktivmaterial ausschließlich das oben genannte oxidische Material und/oder einen der genannten Katalysatoren und die dritte und gegebenenfalls die vierte und/oder die fünfte Elektrode ausschließlich mindestens eines der oben genannten Kohlenstoff-basierten Materialien aufweist: Die dritte und gegebenenfalls die vierte und/oder die fünfte Elektrode können in diesem Fall elektrische Energie nur statisch speichern. Sie sind dann aber besser zur Abgabe von kurzen Pulsströmen hoher Intensität geeignet als die zweite Elektrode. Auch dies gilt natürlich insbesondere dann, wenn gleichzeitig die negative Elektrode zumindest einen Anteil an mindestens einem der oben genannten Kohlenstoff-basierten Materialien aufweist.
(c) Die erste Elektrode ist eine negative Elektrode und umfasst ein negatives Elektrodenaktivmaterial während die zweite, die dritte und gegebenenfalls die vierte und/oder die fünfte Elektrode positive Elektroden sind und jeweils ein positives Elektrodenaktivmaterial umfassen, wobei die zweite Elektrode als Elektrodenaktivmaterial neben dem oben genannten oxidierbaren Metall mindestens eines der oben genannten Kohlenstoff-basierten Materialien aufweist und die dritte und gegebenenfalls die vierte und/oder die fünfte Elektrode neben dem oben genannten oxidierbaren Metall mindestens eines der oben genannten Kohlenstoff-basierten Materialien aufweisen, wobei die Menge an dem mindestens einem der oben genannten Kohlenstoff-basierten Materialien in der zweiten Elektrode größer ist als in den weiteren positiven Elektroden: Alle Elektroden speichern in diesem Fall elektrische Energie sowohl in einer Doppelschicht als auch elektrochemisch. Sie weisen somit sowohl eine Doppelschichtkapazität auf als auch eine sogenannte Pseudokapazität (Speicherung elektrischer Energie durch Faraday'schen Ladungsaustausch mit Hilfe von Redoxreaktionen). Die Doppelschichtkapazität der zweiten Elektrode ist aber größer als die der anderen positiven Elektroden, weshalb die zweite Elektrode besser zur Abgabe von kurzen Pulsströmen hoher Intensität geeignet ist als die dritte und/oder die vierte und/oder die fünfte Elektrode. Dies gilt natürlich insbesondere dann, wenn gleichzeitig die negative Elektrode zumindest einen Anteil an mindestens einem der oben genannten Kohlenstoff-basierten Materialien aufweist.
(d) Die erste Elektrode ist eine negative Elektrode und umfasst ein negatives Elektrodenaktivmaterial während die zweite, die dritte und gegebenenfalls die vierte und/oder die fünfte Elektrode positive Elektroden sind und jeweils ein positives Elektrodenaktivmaterial umfassen, wobei die zweite Elektrode als Elektrodenaktivmaterial neben dem oben genannten oxidierbaren Metall mindestens eines der oben genannten Kohlenstoff-basierten Materialien aufweist und die dritte und gegebenenfalls die vierte und/oder die fünfte Elektrode neben dem oben genannten oxidierbaren Metall mindestens eines der oben genannten Kohlenstoff-basierten Materialien aufweisen, wobei die Menge an dem mindestens einem der oben genannten Kohlenstoff-basierten Materialien in der zweiten Elektrode niedriger ist als in den weiteren positiven Elektroden: Auch in diesem Fall speichern alle Elektroden elektrische Energie sowohl in einer Doppelschicht als auch elektrochemisch. Hier sind jedoch die dritte und gegebenenfalls die vierte und/oder die fünfte Elektrode besser zur Abgabe von kurzen Pulsströmen hoher Intensität geeignet als die zweite Elektrode. Auch dies gilt natürlich insbesondere dann, wenn gleichzeitig die negative Elektrode zumindest einen Anteil an mindestens einem der oben genannten Kohlenstoff-basierten Materialien aufweist.

In einer Weiterbildung der Erfindung zeichnet sich die beanspruchte Zelle durch mindestens eines der unmittelbar folgenden Merkmale a. und b. aus:
a. Die Kapazitäten der ersten Elektrode auf der einen Seite sowie der zweiten und der dritten Elektrode sowie gegebenenfalls der vierten und/oder der fünften Elektrode auf der anderen Seite stehen in einem Verhältnis X im Bereich von 2: 1 bis 1 : 2, bevorzugt im Bereich von 1,5 : 1 bis 1 : 1,5.
b. Die Kapazitäten der zweiten Elektrode auf der einen Seite sowie der dritten Elektrode sowie gegebenenfalls der vierten und/oder der fünften Elektrode auf der anderen Seite stehen in einem Verhältnis X im Bereich von 100 : 1 bis 1 : 100, bevorzugt im Bereich von 10 : 1 bis 1 : 10.

In einer weiteren möglichen Weiterbildung der Erfindung zeichnet sich die beanspruchte Zelle durch mindestens eines der unmittelbar folgenden Merkmale a. bis c. aus:
a. Die Elektroden und der Elektrolyt sind als Schichten mit jeweils einer Dicke im Bereich von 10 µm bis 200 µm, bevorzugt von 20 µm bis 100 µm, ausgebildet.
b. Die Elektroden und der Elektrolyt sind durch Druck aus einer Suspension oder Paste gebildet.
c. Der ionenleitfähige Elektrolyt bedeckt die auf dem Substrat angeordneten Elektroden vollständig.

In einigen besonders bevorzugten Ausführungsformen sind die unmittelbar vorstehenden Merkmale a. und b., gegebenenfalls aber auch alle Merkmale a. bis c., in Kombination miteinander realisiert.

Bevorzugt kommt bei der Bildung der Elektroden als Druckverfahren ein Siebdruckverfahren zum Einsatz. Beim Siebdruck handelt es sich bekanntlich um ein Druckverfahren, bei dem eine Suspension oder Paste mittels eines Rakels durch ein feinmaschiges Gewebe hindurch auf das zu bedruckende Material gepresst wird. An denjenigen Stellen des Gewebes, an denen dem Druckbild entsprechend keine Suspension oder Paste aufgedruckt werden soll, werden die Maschenöffnungen des Gewebes durch eine Schablone undurchlässig gemacht. An den übrigen Stellen sollte die Suspension oder Paste dagegen die Maschenöffnungen problemlos durchdringen können. Damit es nicht zu einem Verstopfen der Maschenöffnungen kommen kann, sollten die in der Suspension oder Paste enthaltenen festen Bestandteile eine gewisse Maximalgröße, die unter der Maschenöffnungsweite liegen sollte, nicht überschreiten.

Die beanspruchte Anordnung umfasst mindestens zwei elektrisch miteinander verschaltete Bauteile und zeichnet sich durch das folgende Merkmal aus:
a. Sie umfasst eine Ausführungsform der oben beschriebenen elektrochemischen Zelle, die zur Energieversorgung der Bauteile dient.

Bevorzugt zeichnet sich die Anordnung durch mindestens eines der unmittelbar folgenden zusätzlichen Merkmale a. und b., bevorzugt durch beide derfolgenden Merkmale, aus:
a. Die Anordnung umfasst ein erstes elektrisches Bauteil, das mit der ersten und mit der zweiten Elektrode elektrisch verbunden ist.
b. Die Anordnung umfasst ein zweites elektrisches Bauteil, das mit der ersten und der dritten Elektrode elektrisch verbunden ist.

Es ist also bevorzugt, dass die elektrochemische Zelle sowohl das erste als auch das zweite Bauteil mit elektrischer Energie versorgt. Die Bauteile sind beide mit der ersten Elektrode verbunden. Die zur ersten Elektrode entgegengesetzt gepolten Elektroden sind dabei jeweils aber nur mit einem der Bauteile verbunden. Dies hat den Vorteil, dass die Bauteile unabhängig voneinander betrieben werden können. Gegebenenfalls können die zweite und die dritte Elektrode, wie oben beschrieben, auch spezifisch an spezielle energetische Anforderungen der Bauteile angepasst werden.

In einer Weiterbildung zeichnet sich die Anordnung durch mindestens eines der unmittelbar folgenden zusätzlichen Merkmale a. und b., bevorzugt durch beide der folgenden Merkmale, aus:
a. Das erste elektrische Bauteil ist ausgewählt aus der Gruppe mit elektrischem Schalter, integrierter Schaltkreis, Transistor, Diode, optischer Signalgeber, akustischer Signalgeber und Sensor.
b. Das zweite elektrische Bauteil ist ausgewählt aus der Gruppe mit elektrischem Schalter, integrierter Schaltkreis, Transistor, Diode, optischer Signalgeber, akustischer Signalgeber und Sensor.

In besonders bevorzugten Ausführungsformen unterscheiden sich das erste und das zweite Bauteil. So kann das erste Bauteil beispielsweise ein integrierter Schaltkreis sein während das zweite Bauteil ein optischer Signalgeber in Form einer LED ist.

In einer weiteren möglichen Weiterbildung zeichnet sich die Anordnung durch das unmittelbar folgende zusätzliche Merkmal a. aus:
a. Die elektrischen Bauteile der Anordnung sind über gedruckte Leiterbahnen mit der elektrochemischen Zelle verbunden.

Am einfachsten ist es, das Substrat, auf dem die Elektroden der erfindungsgemäßen Zelle angeordnet sind, mit Leiterbahnen zu versehen, bevor die Elektroden auf das Substrat aufgebracht werden. Die Leiterbahnen müssen allerdings nicht unbedingt gedruckt werden. Sie können beispielsweise auch durch Sputtern oder über eine Abscheidung aus der Gasphase gebildet werden. Dem Fachmann sind entsprechende Vorgehensweisen bekannt.

Abhängig von der Art ihrer Herstellung umfassen die Leiterbahnen bevorzugt entweder eine durchgehende Metallschicht oder miteinander in Kontakt stehende Metallpartikel und/oder Kohlenstoffpartikel.

In einer besonders bevorzugten Weiterbildung zeichnet sich die Anordnung durch das unmittelbar folgende zusätzliche Merkmal a. aus:
a. Die Anordnung umfasst mindestens eine zusätzliche elektrochemische Zelle, die in Reihe oder parallel zu der elektrochemischen Zelle geschaltet ist.

Durch die mindestens eine zusätzliche Zelle können innerhalb der Anordnung unterschiedliche Spannungen bereitgestellt werden. So ist es beispielsweise möglich, in einer erfindungsgemäßen Anordnung zwischen eine elektrochemische Zelle, die als erste Elektrode eine negative Elektrode und als zweite und dritte Elektrode zwei positive Elektroden aufweist, und eines der elektrischen Bauteile eine zusätzliche elektrochemische Zelle mit einer positiven Elektrode und einer negativen Elektrode zu schalten und dabei die zweite Elektrode mit der negativen Elektrode der zusätzlichen Zelle und das Bauteil mit der positiven Elektrode der zusätzlichen Zelle zu verbinden. Die Spannungen der in Serie geschalteten Zellen addieren sich so.

Weitere Merkmale und Vorteile der beschriebenen Erfindung ergeben sich aus der nachfolgend beschriebenen Zeichnung, in der eine bevorzugte Ausführungsform der erfindungsgemäßen Anordnung und eine bevorzugte Ausführungsform der erfindungsgemäßen elektrochemischen Zelle dargestellt sind. Die beschriebenen Ausführungsformen dienen lediglich zur Erläuterung und zum besseren Verständnis der Erfindung und sind in keiner Weise einschränkend zu verstehen.

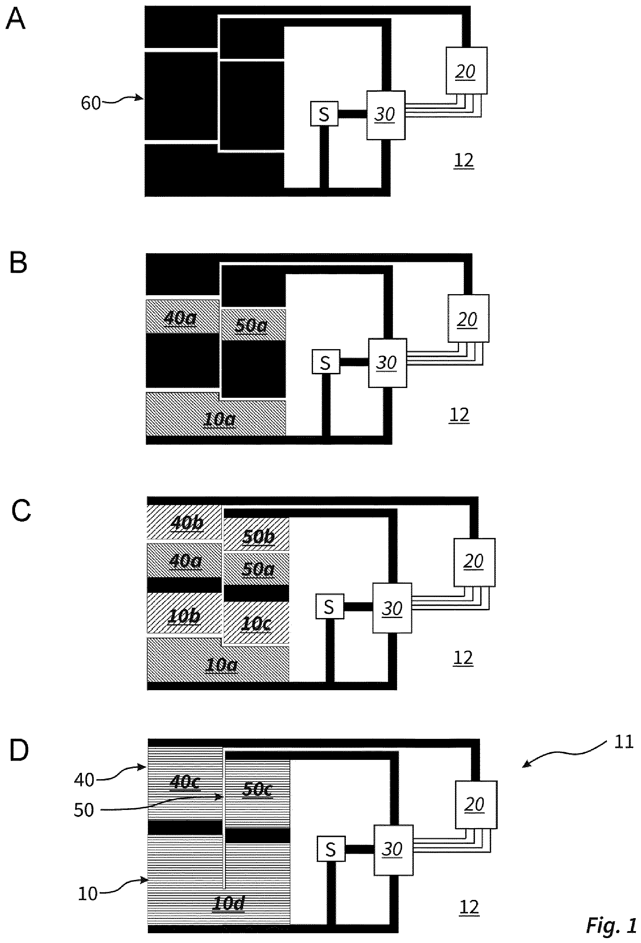

In Fig. 1 ist die Herstellung einer erfindungsgemäßen Anordnung illustriert anhand derer auch der Aufbau einer erfindungsgemäßen elektrochemischen Zelle verdeutlicht wird.

1A Zur Herstellung der Anordnung 11 wird eine Stromableiterstruktur 60 (als schwarze, durchgehende Schicht dargestellt) auf ein elektrisch nichtleitendes Substrat 12 gedruckt. Auf das Substrat 12 werden anschließend die elektrische Bauteile 20 (im Beispiel ein integrierter Schaltkreis) und 30 (im Beispiel eine LED) sowie der Schalter S mittels eines Leitklebers aufgeklebt. Diese sind über die Stromableiterstruktur 60 miteinander verbunden. Die Stromableiterstruktur 60 umfasst eine Lage aus Silberpartikeln unmittelbar auf dem Substrat, die von einer Lage aus Kohlenstoffpartikeln abgedeckt ist.

1B In einem weiteren Schritt wird die Stromableiterstruktur 60 mit den Zinkanoden 10a, 40a und 50a teilweise überdruckt.

1C In einem weiteren Schritt wird die Stromableiterstruktur 60 mit den Braunsteinkathoden 10b, 10c, 40b und 50b teilweise überdruckt.

1D In einem weiteren Schritt werden die Zinkanoden 10a, 40a und 50a und die Braunsteinkathoden 10b, 10c, 40b und 50b einschließlich von den Zinkanoden und den Braunsteinkathoden gebildeter Spalte mit den Elektrolytschichten 10d, 40c und 50c überdruckt. In diesem Schritt werden die elektrochemischen Zellen 10, 40 und 50 gebildet.

Bei der elektrochemischen Zelle 10 handelt es sich um eine Ausführungsform einer erfindungsgemä-βen Zelle, die als erste Elektrode einer ersten Polarität die Zinkanode 10a und als zweite Elektrode einer zweiten, der ersten Polarität entgegengesetzten Polarität die Braunsteinkathode 10b und als dritte Elektrode, welche die gleiche Polarität wie die zweite Elektrode aufweist, die Braunsteinkathode 10c aufweist. Die erste Elektrode 10a, die zweite Elektrode 10b und die dritte Elektrode 10c sind getrennt voneinander in einer koplanaren Anordnung nebeneinander auf der Oberfläche des Substrats 10 angeordnet. Über den ionenleitfähigen Elektrolyten 10c ist die erste Elektrode mit der zweiten und der dritten Elektrode verbunden.

Die elektrochemischen Zellen 40 und 50 sind zusätzliche elektrochemische Zellen, die in Reihe mit der Zelle 10 geschaltet sind. Hierzu sind die Braunsteinkathoden 10b und 10c der Zelle 10 über die Stromableiterstruktur 60 elektrisch leitend mit den Zinkanoden 40a und 50a verbunden.

Mit der einen Zelle 10 können sowohl die Bauteile 20 und 30 zuverlässig betrieben werden, obwohl ihre jeweiligen Anforderungen bezgl. ihrer Energieversorgung sehr unterschiedlich ist. So können beispielsweise die Braunsteinkathode 10b und die Zelle 40 dazu ausgelegt werden, die LED 20 auch mit hohen pulsartigen Strömen versorgen zu können. Die Braunsteinkathode 10c und die Zelle 50 können gleichzeitig dazu ausgelegt werden, das Bauteil 30 gleichmäßig mit Strömen geringer Intensität zu versorgen. Entsprechend können die Zellen Elektroden der Zellen 10, 40 und 50 ausgelegt werden. Die zur Verfügung stehende Gesamtfläche auf dem Substrat 12 kann so optimal aufgeteilt werden. Die Ausbeutung der Aktivmaterialien ist effizienter. Die Anzahl der spannungsstabilisierenden Elemente ist dabei minimiert.

## Patentansprüche

1. Elektrochemische Zelle (10) mit den folgenden Merkmalen:
a. Sie umfasst eine erste Elektrode (10a) einer ersten Polarität,
b. Sie umfasst eine zweite Elektrode (10b) einer zweiten, der ersten Polarität entgegengesetzten Polarität,
c. Sie umfasst eine dritte Elektrode (10c), welche die gleiche Polarität wie die zweite Elektrode aufweist,
wobei
d. die erste Elektrode (10a), die zweite Elektrode (10b) und die dritte Elektrode (10c) getrennt voneinander in einer koplanaren Anordnung nebeneinander auf einer Oberfläche eines Substrats (12) angeordnet sind und
e. die erste Elektrode (10a) mit der zweiten Elektrode (10b) und der dritten Elektrode (10c) über einen ionenleitfähigen Elektrolyten (10d) verbunden ist.

2. Elektrochemische Zelle (10) nach Anspruch 1 mit mindestens einem der folgenden zusätzlichen Merkmale:
a. Sie umfasst eine vierte und/oder eine fünfte Elektrode, welche die gleiche Polarität wie die zweite Elektrode aufweist.
b. Die erste, die zweite, die dritte sowie die vierte und/oder die fünfte Elektrode sind in einer koplanaren Anordnung nebeneinander auf dem Substrat angeordnet.
c. Die erste Elektrode ist mit der vierten und/oder der fünften Elektrode über einen ionenleitfähigen Elektrolyten verbunden.

3. Elektrochemische Zelle (10) nach einem der vorhergehenden Ansprüche mit mindestens einem der folgenden zusätzlichen Merkmale:
a. Die erste Elektrode (10a) ist eine negative Elektrode und umfasst ein negatives Elektrodenaktivmaterial während die zweite (10b), die dritte (10c) und gegebenenfalls die vierte und/oder die fünfte Elektrode positive Elektroden sind und jeweils ein positives Elektrodenaktivmaterial umfassen.
b. Das positive Elektrodenaktivmaterial der zweiten Elektrode unterscheidet sich vom positiven Elektrodenaktivmaterial der dritten und gegebenenfalls der vierten und/oder der fünften Elektrode.
c. Die erste Elektrode ist eine positive Elektrode und umfasst ein positives Elektrodenaktivmaterial während die zweite, die dritte und gegebenenfalls die vierte und/oder die fünfte Elektrode negative Elektroden sind und jeweils ein negatives Elektrodenaktivmaterial umfassen.
d. Das negative Elektrodenaktivmaterial der zweiten Elektrode unterscheidet sich vom negativen Elektrodenaktivmaterial der dritten und gegebenenfalls der vierten und/oder der fünften Elektrode.

4. Elektrochemische Zelle (10) nach einem der vorhergehenden Ansprüche mit mindestens einem der folgenden zusätzlichen Merkmale:
a. Die Kapazitäten der ersten Elektrode (10a) auf der einen Seite sowie der zweiten und der dritten Elektrode (10b; 10c) sowie gegebenenfalls der vierten und/oder der fünften Elektrode auf der anderen Seite stehen in einem Verhältnis X im Bereich von 2 : 1 bis 1: 2.
b. Die Kapazitäten der zweiten Elektrode (10b) auf der einen Seite sowie der dritten Elektrode (10c) sowie gegebenenfalls der vierten und/oder der fünften Elektrode auf der anderen Seite stehen in einem Verhältnis X im Bereich von 100 : 1 bis 1: 100.

5. Elektrochemische Zelle (10) nach einem der vorhergehenden Ansprüche mit mindestens einem der folgenden zusätzlichen Merkmale:
a. Die Elektroden (10a; 10b; 10c; 40a; 40b; 50a; 50b) und der Elektrolyt (10d; 40c; 50c) sind als Schichten mit einer Dicke im Bereich von 10 µm bis 200 µm ausgebildet.
b. Die Elektroden (10a; 10b; 10c; 40a; 40b; 50a; 50b) und der Elektrolyt (10d; 40c; 50c) sind durch Druck aus einer Suspension oder Paste gebildet.
c. Der ionenleitfähige Elektrolyt (10d; 40c; 50c) bedeckt die auf dem Substrat angeordneten Elektroden (10a; 10b; 10c; 40a; 40b; 50a; 50b) vollständig.

6. Anordnung (11) elektrisch miteinander verschalteter Bauteile mit dem folgenden Merkmal:
a. Sie umfasst eine elektrochemische Zelle (10) nach einem der Ansprüche 1 bis 5 zur Energieversorgung der Bauteile (20; 30).

7. Anordnung (11) nach Anspruch 6 mit den folgenden zusätzlichen Merkmalen:
a. Ein erstes Bauteil (20) ist mit der ersten Elektrode (10a) und mit der zweiten Elektrode (10b) elektrisch verbunden.
b. Ein zweites Bauteil (30) ist mit der ersten Elektrode (10a) und der dritten Elektrode (10c) elektrisch verbunden.

8. Anordnung (11) nach Anspruch 7 mit mindestens einem der folgenden zusätzlichen Merkmale:
a. Das erste elektrische Bauteil (20) ist ausgewählt aus der Gruppe mit elektrischem Schalter, integrierter Schaltkreis, Transistor, Diode, optischer Signalgeber, akustischer Signalgeber und Sensor.
b. Das zweite elektrische Bauteil (30) ist ausgewählt aus der Gruppe mit elektrischem Schalter, integrierter Schaltkreis, Transistor, Diode, optischer Signalgeber, akustischer Signalgeber und Sensor.

9. Anordnung (11) nach einem der Ansprüche 6 bis 8 mit dem folgenden zusätzlichen Merkmal:
a. Die elektrischen Bauteile (20; 30) der Anordnung (11) sind über gedruckte Leiterbahnen (60) mit der elektrochemischen Zelle (10) nach einem der Ansprüche 1 bis 5 verbunden.

10. Anordnung (11) nach einem der Ansprüche 6 bis 9 mit dem folgenden zusätzlichen Merkmal:
a. Sie umfasst mindestens eine zusätzliche elektrochemische Zelle (40; 50), die in Reihe oder parallel zu der Zelle (10) nach einem der Ansprüche 1 bis 5 geschaltet ist.

## Claims

1. Electrochemical cell (10) having the following features:
a. It comprises a first electrode (10a) of a first polarity,
b. It comprises a second electrode (10b) of a second polarity opposite to the first polarity,
c. It comprises a third electrode (10c) that has the same polarity as the second electrode,
wherein
d. the first electrode (10a), the second electrode (10b) and the third electrode (10c) are arranged on a surface of a substrate (12) separately from one another, side by side in a coplanar arrangement and
e. the first electrode (10a) is connected to the second electrode (10b) and the third electrode (10c) via an ion-conducting electrolyte (10d).

2. Electrochemical cell (10) according to Claim 1 having at least one of the following additional features:
a. It comprises a fourth and/or a fifth electrode that has the same polarity as the second electrode.
b. The first, the second, the third and the fourth and/or fifth electrode are arranged on the substrate side by side in a coplanar arrangement.
c. The first electrode is connected to the fourth and/or fifth electrode via an ion-conducting electrolyte.

3. Electrochemical cell (10) according to either of the preceding claims having at least one of the following additional features:
a. The first electrode (10a) is a negative electrode and comprises a negative electrode active material, whereas the second (10b), third (10c) and - if present - fourth and/or fifth electrodes are positive electrodes and in each case comprise a positive electrode active material.
b. The positive electrode active material of the second electrode differs from the positive electrode active material of the third and - if present - fourth and/or fifth electrodes.
c. The first electrode is a positive electrode and comprises a positive electrode active material, whereas the second, third and - if present - fourth and/or fifth electrodes are negative electrodes and in each case comprise a negative electrode active material.
d. The negative electrode active material of the second electrode differs from the negative electrode active material of the third and - if present - fourth and/or fifth electrodes.

4. Electrochemical cell (10) according to any of the preceding claims having at least one of the following additional features:
a. The capacities of the first electrode (10a) on the one hand and of the second and third electrodes (10b; 10c) and - if present - fourth and/or fifth electrode on the other are in a ratio X in the range from 2:1 to 1:2.
b. The capacities of the second electrode (10b) on the one hand and of the third electrode (10c) and - if present - fourth and/or fifth electrode on the other are in a ratio X in the range from 100:1 to 1:100.

5. Electrochemical cell (10) according to any of the preceding claims having at least one of the following additional features:
a. The electrodes (10a; 10b; 10c; 40a; 40b; 50a; 50b) and the electrolyte (10d; 40c; 50c) are formed as layers having a thickness in the range from 10 µm to 200 µm.
b. The electrodes (10a; 10b; 10c; 40a; 40b; 50a; 50b) and the electrolyte (10d; 40c; 50c) are formed from a suspension or paste through pressure.
c. The ion-conducting electrolyte (10d; 40c; 50c) covers the electrodes (10a; 10b; 10c; 40a; 40b; 50a; 50b) arranged on the substrate completely.

6. Arrangement (11) of components electrically connected to one another having the following feature:
a. It comprises an electrochemical cell (10) according to any of Claims 1 to 5 as an energy supply for the components (20; 30).

7. Arrangement (11) according to Claim 6 having the following additional features:
a. A first component (20) is electrically connected to the first electrode (10a) and to the second electrode (10b) .
b. A second component (30) is electrically connected to the first electrode (10a) and to the third electrode (10c) .

8. Arrangement (11) according to Claim 7 having at least one of the following additional features:
a. The first electrical component (20) is selected from the group comprising electrical switch, integrated circuit, transistor, diode, optical signalling device, acoustic signalling device and sensor.
b. The second electrical component (30) is selected from the group comprising electrical switch, integrated circuit, transistor, diode, optical signalling device, acoustic signalling device and sensor.

9. Arrangement (11) according to any of Claims 6 to 8 having the following additional feature:
a. The electrical components (20; 30) of the arrangement (11) are connected via printed conductive tracks (60) to the electrochemical cell (10) according to any of Claims 1 to 5.

10. Arrangement (11) according to any of Claims 6 to 9 having the following additional feature:
a. It comprises at least one additional electrochemical cell (40; 50) that is connected in series or in parallel to the cell (10) according to any of Claims 1 to 5.

## Revendications

1. Cellule électrochimique (10) présentant les caractéristiques suivantes :
a. Elle comprend une première électrode (10a) d'une première polarité,
d. Elle comprend une deuxième électrode (10b) d'une deuxième polarité opposée à la première polarité,
c. Elle comprend une troisième électrode (10c) qui présente la même polarité que la deuxième électrode, dans laquelle
d. la première électrode (10a), la deuxième électrode (10b) et la troisième électrode (10c) sont agencées séparément les unes à côté des autres dans un agencement coplanaire sur une surface d'un substrat (12), et
e. la première électrode (10a) est reliée à la deuxième électrode (10b) et à la troisième électrode (10c) par l'intermédiaire d'un électrolyte conducteur d'ions (10d).

2. Cellule électrochimique (10) selon la revendication 1, présentant au moins l'une des caractéristiques supplémentaires suivantes :
a. Elle comprend des quatrième et/ou cinquième électrodes qui présentent la même polarité que la deuxième électrode.
b. Les première, deuxième, troisième ainsi que quatrième et/ou cinquième électrodes sont agencées côte à côte sur le substrat selon un agencement coplanaire.
c. La première électrode est reliée au quatrième et/ou cinquième électrodes par l'intermédiaire d'un électrolyte conducteur d'ions.

3. Cellule électrochimique (10) selon l'une quelconque des revendications précédentes, présentant au moins l'une des caractéristiques supplémentaires suivantes :
a. La première électrode (10a) est une électrode négative et comprend un matériau actif d'électrode négatif tandis que les deuxième (10b), troisième (10c) et, le cas échéant, quatrième et/ou cinquième électrodes sont des électrodes positives et comprennent respectivement un matériau actif d'électrode positif.
b. Le matériau actif d'électrode positif de la deuxième électrode est différent du matériau actif d'électrode positif de la troisième électrode et, le cas échéant, des quatrième et/ou cinquième électrodes.
c. La première électrode est une électrode positive et comprend un matériau actif d'électrode positif, tandis que les deuxième, troisième et, le cas échéant, quatrième et/ou cinquième électrodes sont des électrodes négatives et comprennent respectivement un matériau actif d'électrode négatif.
d. Le matériau actif d'électrode négatif de la deuxième électrode est différent du matériau actif d'électrode négatif de la troisième électrode et, le cas échéant, des quatrième et/ou cinquième électrodes.

4. Cellule électrochimique (10) selon l'une quelconque des revendications précédentes, présentant au moins l'une des caractéristiques supplémentaires suivantes :
a. Les capacités de la première électrode (10a), d'un côté, et des deuxième et troisième électrodes (10b ; 10c) et, le cas échéant, des quatrième et/ou cinquième électrodes, de l'autre côté, présentent un rapport X se situant dans la plage de 2 : 1 à 1 : 2.
b. Les capacités de la deuxième électrode (10b), d'un côté, ainsi que de la troisième électrode (10c) ainsi que, le cas échéant, des quatrième et/ou cinquième électrodes, de l'autre côté, présentent un rapport X se situant dans la plage de 100 : 1 à 1 : 100.

5. Cellule électrochimique (10) selon l'une quelconque des revendications précédentes, présentant au moins l'une des caractéristiques supplémentaires suivantes :
a. Les électrodes (10a ; 10b ; 10c ; 40a ; 40b ; 50a ; 50b) et l'électrolyte (10d ; 40c ; 50c) sont réalisés sous la forme de couches ayant une épaisseur se situant dans la plage de 10 µm à 200 pm.
b. Les électrodes (10a ; 10b ; 10c ; 40a ; 40b ; 50a ; 50b) et l'électrolyte (10d ; 40c ; 50c) sont formés par compression d'une suspension ou d'une pâte.
c. L'électrolyte conducteur d'ions (10d ; 40c ; 50c) recouvre entièrement les électrodes (10a ; 10b ; 10c ; 40a ; 40b ; 50a ; 50b) agencées sur le substrat.

6. Ensemble (11) de composants connectés électriquement les uns aux autres et présentant la caractéristique suivante :
a. Il comprend une cellule électrochimique (10) selon l'une quelconque des revendications 1 à 5 pour l'alimentation en énergie des composants (20 ; 30).

7. Ensemble (11) selon la revendication 6, présentant les caractéristiques supplémentaires suivantes :
a. Un premier composant (20) est relié électriquement à la première électrode (10a) et à la deuxième électrode (10b) .
b. Un deuxième composant (30) est relié électriquement à la première électrode (10a) et à la troisième électrode (10c).

8. Ensemble (11) selon la revendication 7, présentant au moins l'une des caractéristiques supplémentaires suivantes :
a. Le premier composant électrique (20) est choisi dans le groupe comprenant un commutateur électrique, un circuit intégré, un transistor, une diode, un générateur de signal optique, un générateur de signal acoustique et un capteur.
b. Le deuxième composant électrique (30) est choisi dans le groupe comprenant un commutateur électrique, un circuit intégré, un transistor, une diode, un générateur de signal optique, un générateur de signal acoustique et un capteur.

9. Ensemble (11) selon l'une quelconque des revendications 6 à 8, présentant la caractéristique supplémentaire suivante :
a. Les composants électriques (20 ; 30) de l'ensemble (11) sont reliés à la cellule électrochimique (10) selon l'une quelconque des revendications 1 à 5 par l'intermédiaire de pistes conductrices imprimées (60).

10. Ensemble (11) selon l'une quelconque des revendications 6 à 9, présentant la caractéristique supplémentaire suivante :
Il comprend au moins une cellule électrochimique supplémentaire (40 ; 50) qui est connectée en série ou en parallèle avec la cellule (10) selon l'une quelconque des revendications 1 à 5.
